# EUROPEAN PATENT SPECIFICATION

(11) **EP 4 039 973 B1**
(45) Date of publication and mention of the grant of the patent: **07.08.2024**
(21) Application number: 21155698.0
(22) Date of filing: 08.02.2021
(51) Int. Cl.: F03D 80/80, H02B 1/20, H02G 5/00

(54) **USAGE OF A LAMINATED STRUCTURE IN A BUSBAR SYSTEM OF A WIND TURBINE AND A WIND TURBINE INCLUDING SUCH A BUSBAR SYSTEM**
VERWENDUNG EINER LAMINIERTEN STRUKTUR IN EINEM SAMMELSCHIENENSYSTEM EINER WINDTURBINE UND WINDTURBINE MIT SOLCH EINEM SAMMELSCHIENENSYSTEM
UTILISATION D'UNE STRUCTURE STRATIFIÉE DANS UN SYSTÈME DE BARRE OMNIBUS D'UNE ÉOLIENNE ET ÉOLIENNE COMPRENANT UN TEL SYSTÈME DE BARRE OMNIBUS

(43) Date of publication of application: 10.08.2022
(73) Proprietor: ABB Schweiz AG, 5400 Baden (CH)
(72) Inventor: Iordanidis, Arthouros, 5400 Baden (CH); Tukia, Jari, 8712 Stäfa (CH)
(74) Representative: Kesselhut, Wolf

(56) References cited:
- EP-A1- 2 624 393
- EP-B1- 2 624 393
- WO-A1-2020/244749
- US-A- 5 365 424

## Description

The invention is related to the usage of a laminated structure in a busbar system of a wind turbine and a wind turbine including such a busbar system, according to the preamble of claim 1 and 8.

Multi-phase busbars are used in switchgears to conduct and distribute alternating electrical current to different electrical devices which are usually installed in switch gear cabinets. In order to provide for the possibility to conduct all three phases or even more phases of an alternating current in a single busbar, multi-phase busbars have been developed which comprise a base layer and a cover layer of electrically insulating material between which two or more layers of conducting sheet metal, in particular copper, are arranged which are electrically insulated from each other by means of insulating intermediate layers.

An afore-described busbar in which the different layers are laminated to each other by means of liquid resin is described ir US 5 365 424 A1 and DE 10 2005 015 945 B4 of the applicant. The laminated busbar has the advantage that it is compact and does not tend to delaminate due to repellant forces which may be generated by the alternating electric currents that are conducted in the different conducting layers, which, in the event of a short circuit, can be in the range of several thousand ampere (kA).

Wind turbines usually comprise a rotor driving an electric generator which upon rotation of the rotor generates an electric AC current, the frequency and electrical output power of which strongly depend on the strength of the wind. In order to compensate for variations in frequency and electrical power, the electric generator is connected to the input side of a phase power converter, which converts the AC output power of the generator into DC power. The DC power is converted into an AC power again having a frequency which matches the frequency of the grid to which the wind power generator is connected.

The electric generator and the phase power converter connected thereto are located in a nacelle of the wind turbine which is rotatably mounted at the end of a tower at a hight of e.g. 50 m or more above the ground. In order to optimize the air flow through the rotor, it is desired to reduce the size of the nacelle. This in turn requires that the space needed for the electrical wiring connecting the electric generator, the wind power converter and other electrical components, is minimized.

One of the main reasons for the space required by the electrical components in the nacelles of wind turbines is that the electrical supply lines and components dissipate a great deal of heat when the turbine is in operation due to the high currents produced by the generator which have to be converted to the higher voltage level of the grid to which the wind turbine is connected.

Accordingly, it is an object of the present invention to suggest a new usage of a known laminated structure which allows for a more compact design and an improved dissipation of thermal energy of a busbar system and electrical components which are accommodated in the nacelle of a wind turbine.

This object is achieved by the usage of a laminated structure as claimed in claim 1 .

Another object of the present invention is to provide a wind turbine having a nacelle which allows for a more compact and cost-efficient design.

This object is achieved by a wind turbine as claimed in claim 8.

According to the invention, a laminated structure of conducting layers and insulating layers which comprises a plurality of contacting holes which penetrate one or more conducting layers of the laminated structure, and in which each contacting hole comprises an insulating sleeve and a conducting pin received therein which contacts an associated conducting layer with one end portion end and extends to the outside of the laminated structure with its second end portion, is used as a bus plate for mounting a phase power converter for converting an electric AC current supplied by an electric generator into an electric AC current of a grid, in a busbar system which is accommodated in the nacelle of a wind turbine that supplies electric energy to the grid.

The invention provides for the advantage that the busbar system, in which the laminated structure is used, comprises a reduced weight and a more compact design as compared to prior art busbar systems employing solid copper bars which are used for the wiring of the electrical components in the nacelle of known wind turbines.

A further advantage of the invention can be seen in that the costs of the wiring of the electrical components which are accommodated in a nacelle of a wind turbine can be significantly reduced due to the reduced amount of metal, in particular copper sheets, which is employed for forming the conducting layers in the laminated structure instead of the massive copper bars used in the prior art.

Moreover, the invention allows for an improved safety for operators working in the nacelle of a wind turbine due to the inherent electrical insulation of the different conducting layers of the laminated structure and the option, to also electrically insulate the front side and back side of the sandwich structure by simply attaching an additional layer of insulating material if desired. In the same way, the overall cooling surface for dissipating the thermal energy generated by the electrical components and the electric current running through the different conducting layers can be enlarged if the laminated structure is accommodated without insulating outer layers in an aeriated housing of insulating material in particular a switch gear cabinet formed of insulating material inside the nacelle.

The invention is hereinafter described with reference to the accompanying drawings. In the drawings
- Fig. 1: is a schematical view of the nacelle of a wind turbine showing the electric generator and further electrical components which are connected to the laminated structure which is uses as a bus plate in a busbar system accommodated in the nacelle,
- Fig. 2: is a schematic cross sectional view of the bus plate of the busbar system of Fig. 1,
- Fig. 3: is a 3-dimensional view of an exemplary embodiment of a circuit breaker which is mounted to a bus plate of a busbar system having three input and three output conducting layers by means of five contacting pins for each phase which extend to the frontside of the laminated structure of the bus plate and which are electrically coupled to a corresponding terminal of the circuit breaker by means of a distribution bar, and
- Fig. 4: is a cross sectional view of the bus plate of Figs. 1 and 2 showing the output terminals of the first circuit breaker, and

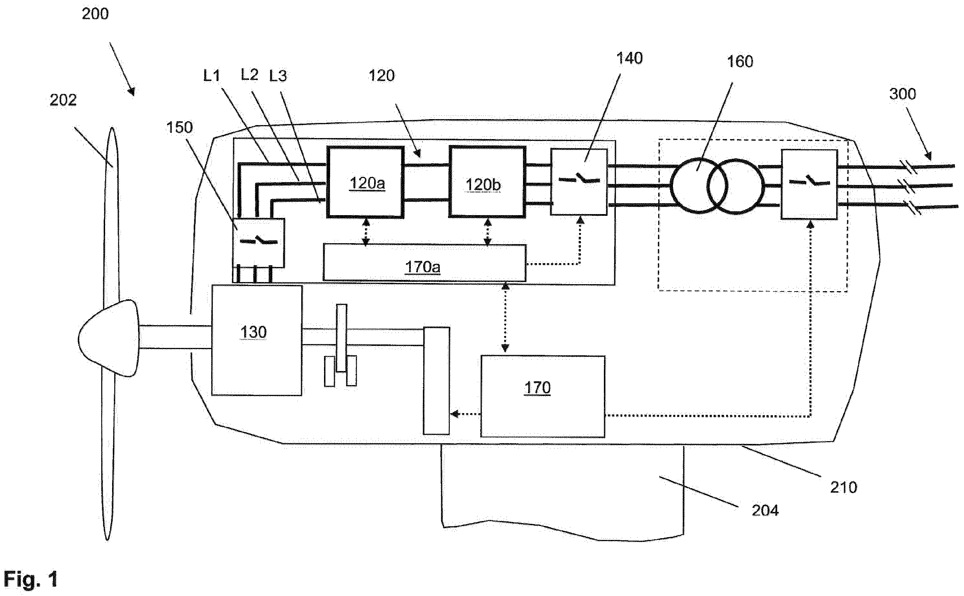

As it is shown in Fig. 1, a wind turbine 200 comprises a rotor 202 driving an electric generator 130 which is located inside a nacelle 210 that is rotatably mounted at the upper end of a tower 204 of the wind turbine 200. The electric generator 120 is connected to a phase power converter 120, which converts the electric AC current of generator 130 into an electric AC current which is supplied to a grid 300. In order to raise the voltage supplied by the electric generator 130 to a higher level, a transformer 160 may be accommodated in the nacelle or alternately in the tower 204 of the wind turbine 200.

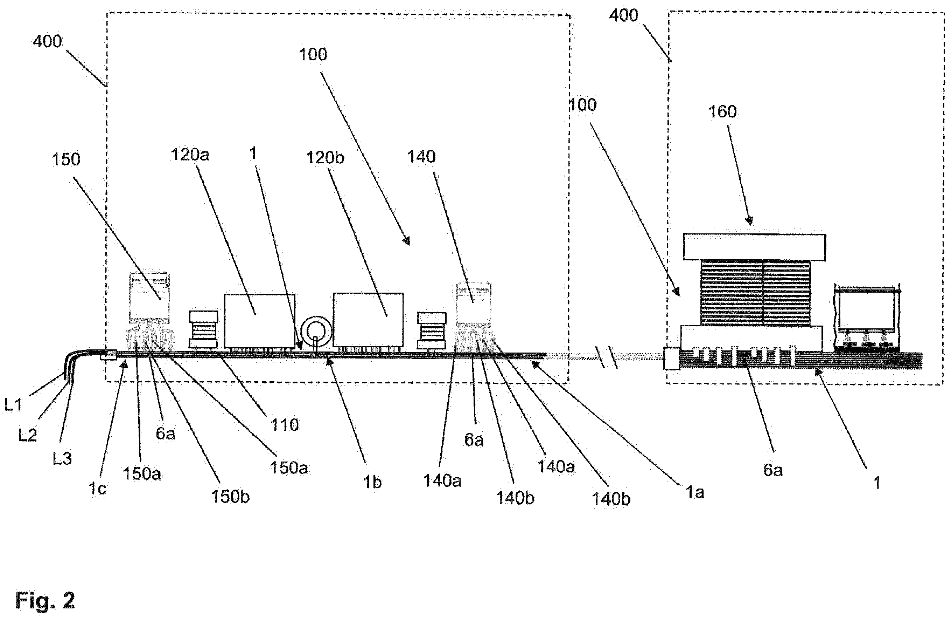

As it can be further seen in more detail from Figs. 2, 3 and 4, the electric power which is supplied by the electric generator 130 via the electrical supply lines for each phase L1, L2, L3 is fed to a laminated structure 1, which is used as a bus plate 110 in a busbar system 100 of the wind turbine 200 to which the phase power converter 120 and other electrical components are mounted. The electrical compounds may combine a first and second circuit breaker 140, 150, which may be controlled by a control unit 170 of the wind turbine 200 or a control unit 170a of the phase power converter 120, in order to interrupt the supply of electric power from the phase power converter 120 to the grid 300 and /or from the generator 130 to the phase power converter 120 in the event of a failure.

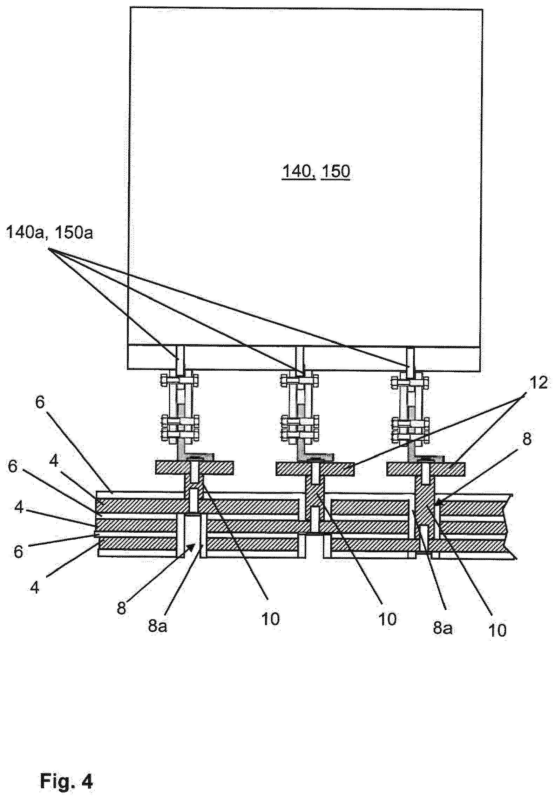

For mechanically mounting the phase power converter 120 and the other electrical components like the circuit breakers 140, 150 and/or capacitors and inductors, which are not designated with reference numerals in Fig. 2, to the bus plate 1 of the busbar system 100, the conducting layers 4 and insulating layers 6 of the laminated structure 1 comprise a plurality of contacting holes 8 which penetrate one or more conducting layers 4 of the laminated structure 1, as it is shown in detail in Fig. 4. Each contacting hole 8 comprises an insulating sleeve 8a which prevents an electric short circuiting of adjacent conducting layers 4 each of which conducts a different phase of the electric current which is supplied by the generator 130 or which is fed to the grid 300 after being converted by the phase power converter 120. In each of the contacting holes 8 a conducting pin 10 is arranged which contacts an associated conducting layer 4 with one end portion end and which extends to the outside of the laminated structure 1 with a second end portion, as it is indicated in Fig. 4 with respect to a laminated structure 1 having three conducting layers 4 to which the input terminals 140a of a circuit breaker 140 are connected. As it is further shown in Fig. 4, complementary contacting holes may be formed on the opposite side of the circuit breaker 140, 150, which may receive conducting pins for mounting additional electric components (not shown).

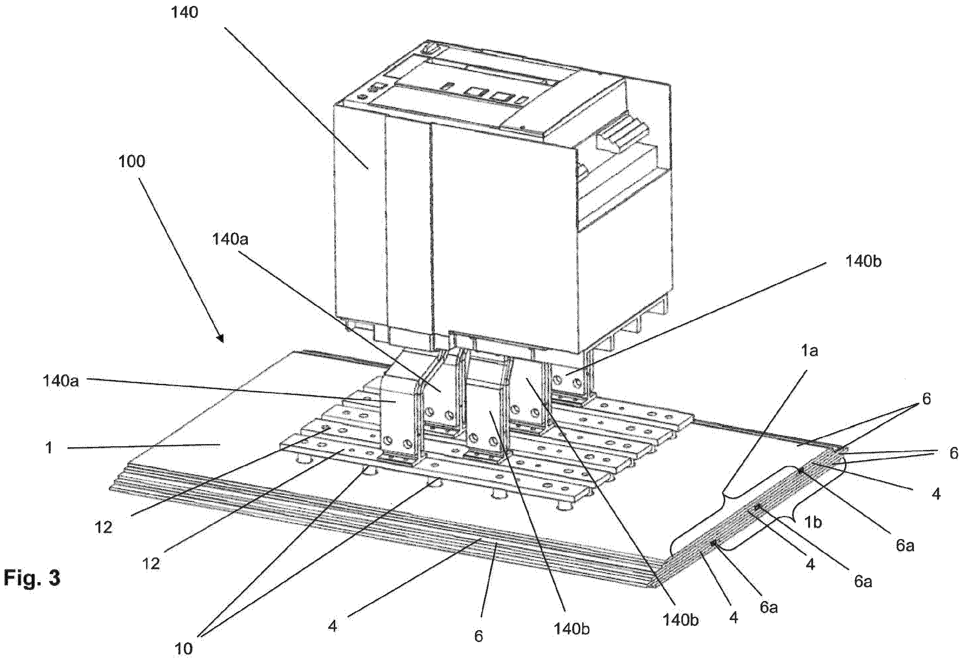

According to another aspect of the invention, the laminated structure 1 may comprise a first and second laminated sub structure 1a, 1b which is electrically insulated from each other, as it is indicated in Fig. 2 and 3. The first laminated sub structure 1a is adapted to be electrically connected to the grid 300 and to the output terminals 140b of a first circuit breaker 140, whereas the second laminated sub structure 1b is adapted to be connected to an output side 120b of the phase power converter 120 and at the same time to the input terminals 140a of the first circuit breaker 140.

Preferably, the first circuit breaker 140, which represents the main circuit breaker of the wind turbine 200, is a known prior art air circuit breaker which comprises at least three input and three output terminals 3.

in order to reduce the electrical resistance of the electrical connection between each conducting layer 4 and an associated input terminal 140a of the first circuit breaker 140, each conducting layer 4 of the second laminated sub structure 1b is preferably electrically connected to an associated input terminal 140a of the first circuit breaker 140 by at least two connecting pins 10, e.g. by 5 conducting pins 10, which are preferably interconnected by a common distribution bar 12, respectively, as it is shown in Fig. 3. Moreover, in this embodiment, each conducting layer 4 of the first laminated sub structure 1a is electrically connected to an associated output terminal 140b of the first circuit breaker 140 by at least two conducting pins 10 which are adapted to contact an associated conducting layer 4 of the first laminated sub structure 1a.

Although the first and second laminated sub structures 1a and 1b may be provided as two bus plates 1 which are physically connected by a lateral separation gap 6a which is located between the input terminals 140a and the output terminals 140b of the first circuit breaker 140, as it is schematically indicated in Fig. 2, there is also the option to provide the bus plate 110 as a laminated structure 1 in which the conducting layers 4 are internally separated by insulating gaps 6a filled with a known insulating material, which extend along an entire plane of a conducting layer 4, as it is indicated in Fig. 3.

According to a further embodiment of the invention, the laminated structure 1 may comprise a third insulated sub structure 1c which is electrically insulated from the first and the second laminated sub structures 1a, 1b in the same way as described herein before with regard to the first and second laminated sub structures 1a and 1b. The third laminated sub structure 1c which is shown in Fig. 2 may be electrically connected to the electric generator 130 and at the same time to a plurality of input terminals 150a of a second circuit breaker 150, which is electrically arranged between the generator 130 and the input side 120a of the phase power converter 120. In this embodiment, the second laminated sub structure 1b is further adapted to be connected to the input side 120a of the phase power converter 120 and at the same time to the output terminals 150b of the second circuit breaker 150. Although not shown in the drawings, the second laminated sub structure 1b may also comprise an insulating separation gap 6a to electrically separate the input side 120a from the output side 120b.

In this embodiment, each conducting layer 4 of the third laminated sub structure 1c is electrically connected to an associated input terminal 150a of the second circuit breaker 150 by at least two conducting pins 10 which are preferably interconnected by a common distribution bar 12, as it has been described herein before with reference to the first main circuit breaker 140 and which contact an associated conducting layer 4. In this embodiment, each conducting layer 4 of the second laminated sub structure 1b is electrically coupled to an associated output terminal 150b of the second circuit breaker 150 by at least two conducting pins 10, which are preferably electrically coupled by a common connection bar 12 and which are adapted to contact an associated conducting layer 4 of the second laminated sub structure 1b as it is shown in Fig. 3.

According to another aspect of the present invention, the phase power converter 120 and at least the first circuit breaker 140 and preferably also further electrical components like capacitors and/or inductors which are indicated in Figs. 1 and 2, may be mounted to conducting pins 10 of the bus plate 110 which extend out of the contacting holes 8 on the same side of the laminated structure 1. This provides for an even cooling surface on the rear side at the bus plate 110.

According to another object of the present invention, the laminated structure 1 is a flat structure which comprises a front side, which is formed of an insulating material or covered with such an insulating material, from which the conducting pins 10 for mechanically mounting the phase power converter 120 and any other electrical devices project. The flat laminated structure of this embodiment may further comprise an electrically conducting rear side, which may be formed by an uncoated layer of sheet metal, preferably copper, which is electrically connected to protective earth of the grid 300, in order to dissipate the thermal energy which is generated in the conducting layers 4 of the laminated structure 1. The laminated structure 1 which forms the bus plate of the busbar system 100 may be directly coupled to a frame of the nacelle 210 or a switch gear 400, in order to mechanically hold the electrical components and at the same time provide for a highly efficient supply of the electrical components with electric power.

The laminated structure 1 is preferably arranged in a switch gear 400 which is located inside the nacelle 210 of the wind turbine 200, and may form the rear wall or sidewall of the switch gear 400.

### Listing of reference numerals

- 1: laminated structure
- 1a: first substructure
- 1b: second substructure
- 1c: third substructure
- 4: conducting layers
- 6: insulating layers
- 8: contacting holes
- 8a: insulating sleeve
- 10: conducting pin
- 12: distribution bar
- 100: busbar system
- 110: bus plate
- 120: phase power converter
- 120a: input side of phase power converter
- 120b: output side of phase power converter
- 130: electric generator
- 140: first circuit breaker
- 140a: input terminals of first circuit breaker
- 140b: output terminals of first circuit breaker
- 150: second circuit breaker
- 150a: input terminals of second circuit breaker
- 150b: output terminals of second circuit breaker
- 160: transformer
- 170: control unit
- 170a: control unit for controlling phase power converter
- 200: wind turbine
- 202: rotor
- 204: tower
- 210: nacelle
- 300: grid
- 400: switch gear
- L1 to L3: electrical phase of AC current

## Claims

1. Usage of a laminated structure (1) of conducting layers (4) and insulating layers (6) comprising a plurality of contacting holes (8) penetrating one or more conducting layers (4) of said laminated structure (1), wherein each contacting hole (8) comprises an insulating sleeve (8a) and a conducting pin (10) arranged therein which contacts an associated conducting layer (4) with one end portion end and extends to the outside of said laminated structure (1) with a second end portion, as a bus plate (110) for mounting a phase power converter (120) for converting an electric AC current supplied by an electric generator (130) into an electric AC current of a grid (300), in a busbar system (100) which is accommodated in the nacelle (210) of a wind turbine (200), wherein
said laminated structure (1) comprises a first and second laminated sub structure (1a), (1b) electrically insulated from each other, wherein the first laminated sub structure (1a) is adapted to be electrically connected to the grid (300) and to the output terminals (140b) of a first circuit breaker (140), and in that said second laminated sub structure (1b) is adapted to be connected to an output side (120b) of said phase power converter (120) and to the input terminals (140a) of said first circuit breaker (140), wherein said phase power converter (120) and at least said first circuit breaker (140) and/or further electrical components like capacitors and/or inductors are mounted to conducting pins (10) extending out of the contacting holes (8) on the same side of the laminated structure 1, and wherein said laminated structure 1 comprises a front side, which is formed of an insulating material, to which the phase power converter (120) is mounted, and an electrically conducting rear side, which is formed by an uncoated layer of sheet metal which is electrically connected to protective earth of the grid (300).

2. Usage according to claim 1,
**characterized in that** each conducting layer (4) of said second laminated sub structure (1b) is adapted to be electrically connected to an associated input terminal (140a) of said first circuit breaker (140) by at least two connecting pins (10), and **in that** each conducting layer (4) of said first laminated sub structure (1a), (1b) is electrically connected to an associated output terminal (140b) of said first circuit breaker (140) by at least two conducting pins (10) which are adapted to contact an associated conducting layer (4) of said first laminated sub structure (1a).

3. Usage according to claim 2,
**characterized in that**
each of said at least two conducting pins (10) connected to a conducting layer (4) are electrically interconnected by a common distribution bar (12).

4. Usage according to claims 1 to 3,
**characterized in that**
said laminated structure (1) comprises a third insulated sub structure (1c) which is electrically insulated from the first and the second laminated sub structures (1a), (1b), wherein the third laminated sub structure (1a) is adapted to be electrically connected to the electric generator (130) and a plurality of input terminals (150a) of a second circuit breaker (150), and **in that** said second laminated sub structure (1b) is adapted to be connected to an input side (120a) of said phase power converter (120) and to the output terminals (150b) of said second circuit breaker (150).

5. Usage according to claim 4,
**characterized in that** each conducting layer (4) of said third laminated sub structure (1c) is electrically connected to an associated input terminal (150a) of said second circuit breaker (150) by at least two conducting pins (10) contacting the conducting layer (4), and **in that** each conducting layer (4) of said second laminated sub structure (1b) is electrically connected to an associated output terminal (150b) of said second circuit breaker (150) by at least two conducting pins (10) which are adapted to contact an associated conducting layer (4) of said second laminated sub structure (1b).

6. Usage according to claim 5,
**characterized in that**
each of said at least two conducting pins (10) connected to a conducting layer (4) are electrically interconnected by a common distribution bar (12).

7. Usage according to any of the preceding claims,
**characterized in that**
said laminated structure (1) is arranged in a switch gear (400) which is located inside the nacelle (210) of the wind turbine (200).

8. Wind turbine (200) comprising a rotor (202), an electric generator coupled to the rotor (202) and a nacelle (210) in which the electric generator (130) and a phase power converter (120) for converting an electric AC current supplied by the electric generator (130) into an electric AC current of a grid (300) are accommodated, wherein the electric generator (130) and the phase power converter (120) are electrically connected to a busbar system (100) which is located inside the nacelle (210), wherein the busbar system (100) comprises a bus plate (110) for mounting the phase power converter (120) which includes a laminated structure (1) of conducting layers (4) and insulating layers (6) having a plurality of contacting holes (8) penetrating one or more conducting layers (4) of said laminated structure (1), and that each contacting hole (8) comprises an insulating sleeve (8a) and a conducting pin (10) arranged therein which contacts an associated conducting layer (4) with one end portion end and extends to the outside of said laminated structure (1) with a second end portion, wherein said laminated structure (1) comprises a first and second laminated sub structure (1a), (1b) electrically insulated from each other, wherein the first laminated sub structure (1a) is adapted to be electrically connected to the grid (300) and to the output terminals (140b) of a first circuit breaker (140), and in that said second laminated sub structure (1b) is adapted to be connected to an output side (120b) of said phase power converter (120) and to the input terminals (140a) of said first circuit breaker (140), wherein said phase power converter (120) and at least said first circuit breaker (140) and/or further electrical components like capacitors and/or inductors are mounted to conducting pins (10) extending out of the contacting holes (8) on the same side of the laminated structure 1, and wherein said laminated structure 1 comprises a front side, which is formed of an insulating material, to which the phase power converter (120) is mounted, and an electrically conducting rear side, which is formed by an uncoated layer of sheet metal which is electrically connected to protective earth of the grid (300).

9. Wind turbine according to claim 8,
**characterized in that**
each conducting layer (4) of said second laminated sub structure (1b) is adapted to be electrically connected to an associated input terminal (140a) of said first circuit breaker (140) by at least two connecting pins (10), and **in that** each conducting layer (4) of said first laminated sub structure (1a), (1b) is electrically connected to an associated output terminal (140b) of said first circuit breaker (140) by at least two conducting pins (10) which are adapted to contact an associated conducting layer (4) of said first laminated sub structure (1a).

10. Wind turbine according to claim 9,
**characterized in that**
each of said at least two conducting pins (10) connected to a conducting layer (4) are electrically interconnected by a common distribution bar (12).

11. Wind turbine according to any of the claims 8 to 10,
**characterized in that**
said laminated structure (1) comprises a third insulated sub structure (1c) which is electrically insulated from the first and the second laminated sub structures (1a), (1b), wherein the third laminated sub structure (1a) is adapted to be electrically connected to the electric generator (130) and a plurality of input terminals (150a) of a second circuit breaker (150), and **in that** said second laminated sub structure (1b) is adapted to be connected to an input side (120a) of said phase power converter (120) and to the output terminals (150b) of said second circuit breaker (150).

## Patentansprüche

1. Verwendung einer laminierten Struktur (1) aus leitenden Schichten (4) und isolierenden Schichten (6) mit einer Vielzahl von Kontaktlöchern (8), die eine oder mehrere leitende Schichten (4) der laminierten Struktur (1) durchdringen, wobei jedes Kontaktloch (8) eine Isolierhülse (8a) und einen darin angeordneten leitenden Stift (10) umfasst, der mit einem Endabschnitt eine zugehörige leitende Schicht (4) kontaktiert und sich mit einem zweiten Endabschnitt zur Außenseite der laminierten Struktur (1) erstreckt, als eine Sammelplatte (110) zum Montieren eines Phasenleistungswandlers (120) zum Umwandeln eines durch einen elektrischen Generator (130) gelieferten elektrischen Wechselstroms in einen elektrischen Wechselstrom eines Stromnetzes (300), in einem in der Gondel (210) einer Windenergieanlage (200) untergebrachten Sammelschienensystem (100), wobei die laminierte Struktur (1) eine erste und eine zweite laminierte Unterstruktur (1a), (1b) umfasst, die elektrisch voneinander isoliert sind, wobei die erste laminierte Unterstruktur (1a) dazu angepasst ist, elektrisch mit dem Stromnetz (300) und mit den Ausgangsanschlüssen (140b) eines ersten Leistungsschalters (140) verbunden zu werden, und dass die zweite laminierte Unterstruktur (1b) dazu angepasst ist, mit einer Ausgangsseite (120b) des Phasenleistungswandlers (120) und mit den Eingangsanschlüssen (140a) des ersten Leistungsschalters (140) verbunden zu werden, wobei der Phasenleistungswandler (120) und zumindest der erste Leistungsschalter (140) und/oder weitere elektrische Komponenten wie Kondensatoren und/oder Induktoren an leitenden Stiften (10) angebracht sind, die sich aus den Kontaktlöchern (8) auf derselben Seite der laminierten Struktur 1 erstrecken, und wobei die laminierte Struktur 1 eine Vorderseite, die aus einem isolierenden Material gebildet ist, an der der Phasenleistungswandler (120) angebracht ist, und eine elektrisch leitende Rückseite aufweist, die durch eine unbeschichtete Blechschicht gebildet ist, die elektrisch mit der Schutzerde des Stromnetzes (300) verbunden ist.

2. Verwendung nach Anspruch 1,
**dadurch gekennzeichnet, dass** jede leitende Schicht (4) der zweiten laminierten Unterstruktur (1b) dazu angepasst ist, mit einem zugehörigen Eingangsanschluss (140a) des ersten Leistungsschalters (140) durch mindestens zwei Verbindungsstifte (10) elektrisch verbunden zu werden, und dass jede leitende Schicht (4) der ersten laminierten Unterstruktur (1a), (1b) mit einem zugehörigen Ausgangsanschluss (140b) des ersten Leistungsschalters (140) durch mindestens zwei leitende Stifte (10) elektrisch verbunden ist, die dazu angepasst sind, eine zugehörige leitende Schicht (4) der ersten laminierten Unterstruktur (1a) zu kontaktieren.

3. Verwendung nach Anspruch 2,
**dadurch gekennzeichnet, dass**
jeder der mindestens zwei leitenden Stifte (10), die mit einer leitenden Schicht (4) verbunden sind, durch eine gemeinsame Verteilerschiene (12) elektrisch miteinander verbunden sind.

4. Verwendung nach Anspruch 1 bis 3,
**dadurch gekennzeichnet, dass**
die laminierte Struktur (1) eine dritte isolierte Unterstruktur (1c) umfasst, die von der ersten und der zweiten laminierten Unterstruktur (1a), (1b) elektrisch isoliert ist, wobei die dritte laminierte Unterstruktur (1a) dazu angepasst ist, mit dem elektrischen Generator (130) und einer Vielzahl von Eingangsanschlüssen (150a) eines zweiten Leistungsschalters (150) elektrisch verbunden zu werden, und dass die zweite laminierte Unterstruktur (1b) dazu angepasst ist, mit einer Eingangsseite (120a) des Phasenleistungswandlers (120) und mit den Ausgangsanschlüssen (150b) des zweiten Leistungsschalters (150) verbunden zu werden.

5. Verwendung nach Anspruch 4,
**dadurch gekennzeichnet, dass** jede leitende Schicht (4) der dritten laminierten Unterstruktur (1c) mit einem zugehörigen Eingangsanschluss (150a) des zweiten Leistungsschalters (150) durch mindestens zwei, die leitende Schicht (4) kontaktierende leitende Stifte (10) elektrisch verbunden ist, und dass jede leitende Schicht (4) der zweiten laminierten Unterstruktur (1b) mit einem zugehörigen Ausgangsanschluss (150b) des zweiten Leistungsschalters (150) durch mindestens zwei leitende Stifte (10) elektrisch verbunden ist, die dazu angepasst sind, eine zugehörige leitende Schicht (4) der zweiten laminierten Unterstruktur (1b) zu kontaktieren.

6. Verwendung nach Anspruch 5,
**dadurch gekennzeichnet, dass**
jeder der mindestens zwei leitenden Stifte (10), die mit einer leitenden Schicht (4) verbunden sind, durch eine gemeinsame Verteilerschiene (12) elektrisch miteinander verbunden sind.

7. Verwendung nach einem der vorhergehenden Ansprüche, **dadurch gekennzeichnet, dass**
die laminierte Struktur (1) in einer Schaltanlage (400) angeordnet ist, die sich innerhalb der Gondel (210) der Windenergieanlage (200) befindet.

8. Windenergieanlage (200), umfassend einen Rotor (202), einen mit dem Rotor (202) gekoppelten elektrischen Generator und eine Gondel (210), in der der elektrische Generator (130) und ein Phasenleistungswandler (120) zur Umwandlung eines durch den elektrischen Generator (130) gelieferten elektrischen Wechselstroms in einen elektrischen Wechselstrom eines Stromnetzes (300) untergebracht sind, wobei der elektrische Generator (130) und der Phasenleistungswandler (120) elektrisch mit einem Sammelschienensystem (100) verbunden sind, das sich innerhalb der Gondel (210) befindet, wobei das Sammelschienensystem (100) eine Sammelplatte (110) zum Befestigen des Phasenleistungswandlers (120) umfasst, der eine laminierte Struktur (1) aus leitenden Schichten (4) und isolierenden Schichten (6) mit einer Vielzahl von Kontaktlöchern (8) umfasst, die eine oder mehrere leitende Schichten (4) der laminierten Struktur (1) durchdringen, und dass jedes Kontaktloch (8) eine Isolierhülse (8a) und einen darin angeordneten leitenden Stift (10) umfasst, der mit einem Endabschnitt eine zugehörige leitende Schicht (4) kontaktiert und sich mit einem zweiten Endabschnitt zur Außenseite der laminierten Struktur (1) erstreckt, wobei die laminierte Struktur (1) eine erste und eine zweite laminierte Unterstruktur (1a), (1b) umfasst, die elektrisch voneinander isoliert sind, wobei die erste laminierte Unterstruktur (1a) dazu angepasst ist, elektrisch mit dem Stromnetz (300) und mit den Ausgangsanschlüssen (140b) eines ersten Leistungsschalters (140) verbunden zu werden, und dass die zweite laminierte Unterstruktur (1b) dazu angepasst ist, mit einer Ausgangsseite (120b) des Phasenleistungswandlers (120) und mit den Eingangsanschlüssen (140a) des ersten Leistungsschalters (140) verbunden zu werden, wobei der Phasenleistungswandler (120) und zumindest der erste Leistungsschalter (140) und/oder weitere elektrische Komponenten wie Kondensatoren und/oder Induktoren an leitenden Stiften (10) angebracht sind, die sich aus den Kontaktlöchern (8) auf derselben Seite der laminierten Struktur 1 erstrecken, und wobei die laminierte Struktur 1 eine Vorderseite, die aus einem isolierenden Material gebildet ist, an der der Phasenleistungswandler (120) angebracht ist, und eine elektrisch leitende Rückseite aufweist, die durch eine unbeschichtete Blechschicht gebildet ist, die elektrisch mit der Schutzerde des Stromnetzes (300) verbunden ist.

9. Windenergieanlage nach Anspruch 8,
**dadurch gekennzeichnet, dass**
jede leitende Schicht (4) der zweiten laminierten Unterstruktur (1b) dazu angepasst ist, mit einem zugehörigen Eingangsanschluss (140a) des ersten Leistungsschalters (140) durch mindestens zwei Verbindungsstifte (10) elektrisch verbunden zu werden, und dass jede leitende Schicht (4) der ersten laminierten Unterstruktur (1a), (1b) mit einem zugehörigen Ausgangsanschluss (140b) des ersten Leistungsschalters (140) durch mindestens zwei leitende Stifte (10) elektrisch verbunden ist, die dazu angepasst sind, eine zugehörige leitende Schicht (4) der ersten laminierten Unterstruktur (1a) zu kontaktieren.

10. Windenergieanlage nach Anspruch 9,
**dadurch gekennzeichnet, dass**
jeder der mindestens zwei leitenden Stifte (10), die mit einer leitenden Schicht (4) verbunden sind, durch eine gemeinsame Verteilerschiene (12) elektrisch miteinander verbunden sind.

11. Windenergieanlage nach einem der Ansprüche 8 bis 10, **dadurch gekennzeichnet, dass**
die laminierte Struktur (1) eine dritte isolierte Unterstruktur (1c) umfasst, die von der ersten und der zweiten laminierten Unterstruktur (1a), (1b) elektrisch isoliert ist, wobei die dritte laminierte Unterstruktur (1a) dazu angepasst ist, mit dem elektrischen Generator (130) und einer Vielzahl von Eingangsanschlüssen (150a) eines zweiten Leistungsschalters (150) elektrisch verbunden zu werden, und dass die zweite laminierte Unterstruktur (1b) dazu angepasst ist, mit einer Eingangsseite (120a) des Phasenleistungswandlers (120) und mit den Ausgangsanschlüssen (150b) des zweiten Leistungsschalters (150) verbunden zu werden.

## Revendications

1. Utilisation d'une structure stratifiée (1) de couches conductrices (4) et de couches isolantes (6) comprenant une pluralité de trous d'entrée en contact (8) pénétrant dans une ou plusieurs couches conductrices (4) de ladite structure stratifiée (1), dans laquelle chaque trou d'entrée en contact (8) comprend un manchon isolant (8a) et une broche conductrice (10) agencée dans celui-ci qui entre en contact avec une couche conductrice associée (4) avec une première partie d'extrémité et s'étend jusqu'à l'extérieur de ladite structure stratifiée (1) avec une seconde partie d'extrémité, en tant que plaque omnibus (110) pour monter un convertisseur de puissance à phases (120) destiné à convertir un courant électrique CA, dont l'alimentation est effectuée par un générateur électrique (130), en un courant électrique CA d'un réseau (300), dans un système de barre omnibus (100) qui est logé dans la nacelle (210) d'une éolienne (200), dans laquelle ladite structure stratifiée (1) comprend des première et deuxième sous-structures stratifiées (1a), (1b) électriquement isolées l'une de l'autre, dans laquelle la première sous-structure stratifiée (1a) est adaptée pour être électriquement connectée au réseau (300) et aux bornes de sortie (140b) d'un premier disjoncteur (140), et en ce que ladite deuxième sous-structure stratifiée (1b) est adaptée pour être connectée à un côté sortie (120b) dudit convertisseur de puissance à phases (120) et aux bornes d'entrée (140a) dudit premier disjoncteur (140), dans laquelle ledit convertisseur de puissance à phases (120) et au moins ledit premier disjoncteur (140) et/ou des composants électriques supplémentaires comme des condensateurs et/ou des inducteurs sont montés sur des broches conductrices (10) s'étendant hors des trous d'entrée en contact (8) sur le même côté de la structure stratifiée (1), et dans laquelle ladite structure stratifiée (1) comprend un côté avant, qui est formé d'un matériau isolant, sur lequel le convertisseur de puissance à phases (120) est monté, et un côté arrière électriquement conducteur, qui est formé par une couche non revêtue de tôle qui est électriquement connectée à la terre de protection du réseau (300).

2. Utilisation selon la revendication 1,
**caractérisée en ce que** chaque couche conductrice (4) de ladite deuxième sous-structure stratifiée (1b) est adaptée pour être électriquement connectée à une borne d'entrée associée (140a) dudit premier disjoncteur (140) par au moins deux broches de connexion (10), et **en ce que** chaque couche conductrice (4) de ladite première sous-structure stratifiée (1a), (1b) est électriquement connectée à une borne de sortie associée (140b) dudit premier disjoncteur (140) par au moins deux broches conductrices (10) qui sont adaptées pour entrer en contact avec une couche conductrice associée (4) de ladite première sous-structure stratifiée (1a).

3. Utilisation selon la revendication 2,
**caractérisée en ce que**
chacune desdites au moins deux broches conductrices (10) connectées à une couche conductrice (4) est électriquement interconnectée par une barre de distribution commune (12).

4. Utilisation selon les revendications 1 à 3,
**caractérisée en ce que**
ladite structure stratifiée (1) comprend une troisième sous-structure isolée (1c) qui est électriquement isolée des première et deuxième sous-structures stratifiées (1a), (1b), dans laquelle la troisième sous-structure stratifiée (1a) est adaptée pour être électriquement connectée au générateur électrique (130) et à une pluralité de bornes d'entrée (150a) d'un second disjoncteur (150), et **en ce que** ladite deuxième sous-structure stratifiée (1b) est adaptée pour être connectée à un côté entrée (120a) dudit convertisseur de puissance à phases (120) et aux bornes de sortie (150b) dudit second disjoncteur (150).

5. Utilisation selon la revendication 4,
**caractérisée en ce que** chaque couche conductrice (4) de ladite troisième sous-structure stratifiée (1c) est électriquement connectée à une borne d'entrée associée (150a) dudit second disjoncteur (150) par au moins deux broches conductrices (10) entrant en contact avec la couche conductrice (4), et **en ce que** chaque couche conductrice (4) de ladite deuxième sous-structure stratifiée (1b) est électriquement connectée à une borne de sortie associée (150b) dudit second disjoncteur (150) par au moins deux broches conductrices (10) qui sont adaptées pour entrer en contact avec une couche conductrice associée (4) de ladite deuxième sous-structure stratifiée (1b).

6. Utilisation selon la revendication 5,
**caractérisée en ce que**
chacune desdites au moins deux broches conductrices (10) connectées à une couche conductrice (4) est électriquement interconnectée par une barre de distribution commune (12).

7. Utilisation selon l'une quelconque des revendications précédentes,
**caractérisée en ce que**
ladite structure stratifiée (1) est agencée dans un appareillage de commutation (400) qui est situé à l'intérieur de la nacelle (210) de l'éolienne (200).

8. Éolienne (200), comprenant un rotor (202), un générateur électrique accouplé au rotor (202) et une nacelle (210) dans laquelle le générateur électrique (130) et un convertisseur de puissance à phases (120) destiné à convertir un courant électrique CA, dont l'alimentation est effectuée par le générateur électrique (130), en un courant électrique CA d'un réseau (300) sont logés, dans laquelle le générateur électrique (130) et le convertisseur de puissance à phases (120) sont électriquement connectés à un système de barre omnibus (100) qui est situé à l'intérieur de la nacelle (210), dans laquelle le système de barre omnibus (100) comprend une plaque omnibus (110) pour monter le convertisseur de puissance à phases (120) qui inclut une structure stratifiée (1) de couches conductrices (4) et de couches isolantes (6) ayant une pluralité de trous d'entrée en contact (8) pénétrant dans une ou plusieurs couches conductrices (4) de ladite structure stratifiée (1), et que chaque trou d'entrée en contact (8) comprend un manchon isolant (8a) et une broche conductrice (10) agencée dans celui-ci qui entre en contact avec une couche conductrice associée (4) avec une première partie d'extrémité et s'étend jusqu'à l'extérieur de ladite structure stratifiée (1) avec une seconde partie d'extrémité, dans laquelle ladite structure stratifiée (1) comprend des première et deuxième sous-structure stratifiée (1a), (1b) électriquement isolées l'une de l'autre, dans laquelle la première sous-structure stratifiée (1a) est adaptée pour être électriquement connectée au réseau (300) et aux bornes de sortie (140b) d'un premier disjoncteur (140), et ladite deuxième sous-structure stratifiée (1b) est adaptée pour être connectée à un côté sortie (120b) dudit convertisseur de puissance à phases (120) et aux bornes d'entrée (140a) dudit premier disjoncteur (140), dans laquelle ledit convertisseur de puissance à phases (120) et au moins ledit premier disjoncteur (140) et/ou des composants électriques supplémentaires comme des condensateurs et/ou des inducteurs sont montés sur des broches conductrices (10) s'étendant hors des trous d'entrée en contact (8) sur le même côté de la structure stratifiée (1), et dans laquelle ladite structure stratifiée (1) comprend un côté avant, qui est formé d'un matériau isolant, sur lequel le convertisseur de puissance à phases (120) est monté, et un côté arrière électriquement conducteur, qui est formé par une couche non revêtue de tôle qui est électriquement connectée à la terre de protection du réseau (300).

9. Éolienne selon la revendication 8,
**caractérisée en ce que**
chaque couche conductrice (4) de ladite deuxième sous-structure stratifiée (1b) est adaptée pour être électriquement connectée à une borne d'entrée associée (140a) dudit premier disjoncteur (140) par au moins deux broches de connexion (10), et **en ce que** chaque couche conductrice (4) de ladite première sous-structure stratifiée (1a), (1b) est électriquement connectée à une borne de sortie associée (140b) dudit premier disjoncteur (140) par au moins deux broches conductrices (10) qui sont adaptées pour entrer en contact avec une couche conductrice associée (4) de ladite première sous-structure stratifiée (1a).

10. Éolienne selon la revendication 9,
**caractérisée en ce que**
chacune desdites au moins deux broches conductrices (10) connectées à une couche conductrice (4) est électriquement interconnectée par une barre de distribution commune (12).

11. Éolienne selon l'une quelconque des revendications 8 à 10,
**caractérisée en ce que**
ladite structure stratifiée (1) comprend une troisième sous-structure isolée (1c) qui est électriquement isolée des première et deuxième sous-structures stratifiées (1a), (1b), dans laquelle la troisième sous-structure stratifiée (1a) est adaptée pour être électriquement connectée au générateur électrique (130) et à une pluralité de bornes d'entrée (150a) d'un second disjoncteur (150), et **en ce que** ladite deuxième sous-structure stratifiée (1b) est adaptée pour être connectée à un côté entrée (120a) dudit convertisseur de puissance à phases (120) et aux bornes de sortie (150b) dudit second disjoncteur (150).
